# EUROPÄISCHE PATENTSCHRIFT

(11) **EP 0 845 695 B1**
(45) Veröffentlichungstag und Bekanntmachung des Hinweises auf die Patenterteilung: **16.10.2002**
(21) Anmeldenummer: 97120259.3
(22) Anmeldetag: 19.11.1997
(51) Int. Cl.: G02F 1/1333, G02F 1/141, G02F 1/1335, B42D 15/10

(54) **Verfahren zur Herstellung von Flüssigkristall-Displays auf Kunststoff-Folien unter Verwendung von bistabilen Flüssigkristallen**
Method of manufacturing of liquid crystal displays on plastic films using bistable liquid crystals
Procédé de fabrication d'un dispositif d'affichage à cristal liquide sur des feuilles en plastique utilisant des cristaux liquides bistables

(30) Priorität: 30.11.1996 DE 19649761
(43) Veröffentlichungstag der Anmeldung: 03.06.1998
(73) Patentinhaber: Universität Stuttgart, 70174 Stuttgart (DE)
(72) Erfinder: Bürkle, Roland, 70197 Stuttgart (DE); Klette, Rüdiger, 70806 Kornwestheim (DE); Lüder, Ernst, 70192 Stuttgart (DE)
(74) Vertreter: Möbus, Rudolf, Dipl.-Ing.

(56) Entgegenhaltungen:
- EP-A- 0 336 321
- EP-A- 0 352 637
- EP-A- 0 473 168
- EP-A- 0 528 397
- GB-A- 2 180 677
- PATENT ABSTRACTS OF JAPAN vol. 018, no. 036 (P-1678), 19. Januar 1994 & JP 05 264978 A (IDEMITSU KOSAN CO LTD), 15. Oktober 1993
- PATENT ABSTRACTS OF JAPAN vol. 014, no. 501 (M-1043), 2. November 1990 & JP 02 208096 A (IDEMITSU KOSAN CO LTD), 17. August 1990

## Beschreibung

Flüssigkristall-Displays werden zunehmend auf Kunststoff-Foliensubstraten gefertigt, da diese gegenüber auf Glassubstraten gefertigten Displays ein sehr viel geringeres Gewicht und eine höhere Flexibilität aufweisen. Damit ist ihre Anwendung insbesondere als Kleinanzeigeelemente für mobile Kleingeräte wie Mobiltelefone oder Scheckkarten interessant. Solche Displays mit bistabilen Flüssigkristallen sind beispielsweise aus der EP 0 528 397 A2, der EP 0 352 637 A2 oder der EP 0 336 321 A2 bekannt. Die bekannten Displays weisen jedoch keine Schutzschichten zur Verhinderung von Wechselwirkungen des Flüssigkristalls mit dem Kunststoffmaterial der Substrate auf. Es kann bei diesen Displays daher zu Gasbildungen oder zu Verklebungen im Inneren der Flüssigkristallzellen kommen.

Die vorliegende Erfindung schlägt nun ein Verfahren vor, mit dem die Herstellung von funktionsstabilen Flüssigkristall-Displays auf Kunststoff-Folien unter Verwendung von bistabilen Flüssigkristallen möglich ist. Das Verfahren weist die Schritte gemäß Anspruch 1 auf.

Für das erfindungsgemäße Flüssigkristall-Display gemäß Anspruch 11 werden als Flüssigkristalle SCT-Flüssigkristalle (stabilized colesteric texture) oder ein FLC-Flüssigkristall (ferroelectric liquid crystal) verwendet. Gerade die FLC-Kristalle zeichnen sich durch eine hohe Stabilität aus. Bei mit diesen Kristallen hergestellten Displays auf Glassubstraten hat sich jedoch eine Empfindlichkeit des Displays gegen Biegung gezeigt. Umso überraschender ist es nun, dass Displays mit FLC-Kristallen auf flexiblen Kunststoff-Folien hergestellt werden können und dort weit weniger anfällig gegen Biegung sind. Das Ergebnis lässt sich damit erklären, dass die Kunststoff-Folie wesentlich dünner und elastischer als ein Glassubstrat ist. Die bei der Biegung des Displays auftretende Scherung zwischen oberer und unterer Substratoberfläche ist daher bei Kunststoff-Folien aufgrund deren Dehnbarkeit geringer, sodass hierdurch die Flüssigkristall-Textur nicht durch einen Fließprozess zwischen den zwei Substratoberflächen zerstört wird. Besonders vorteilhaft und stabil erweisen sich ferroelektrische Flüssigkristalle, die mittels einer Niederfrequenz-Wechselfeldbehandlung in eine so genannte "Bookshelf"-Textur umgewandelt werden können, bei der die aufgerichteten Flüssigkristallschichten senkrecht zu den Substratoberflächen liegen. Diese Flüssigkristall-Textur erweist sich als besonders stabil gegenüber Biege- und Druckbelastungen, insbesondere wenn die Orientierungsschicht schräg zur Substratoberfläche aufgestäubt oder aufgedampft wird.

Die anorganische Schutzschicht, die eine Wechselwirkung von Flüssigkristall und Kunststoffmaterial verhindert, ist aus Tantalpentoxid gebildet. Ohne eine solche Schutzschicht kann es durch chemische Reaktionen zwischen Flüssigkristall und Substratfolie zu Gasbildung oder zu Verklebungen im Inneren der Flüssigkristallzellen kommen. Darüber hinaus bietet diese Schutzschicht einen Schutz gegen Gas- und Flüssigkeitspermeation durch das Kunststoffsubstratmaterial hindurch. Die transparente leitfähige Schicht kann zweckmäßigerweise aus Indium-Zinn-Oxid (ITO) gebildet sein. Als Isolationsschicht lässt sich wieder Tantalpentoxid verwenden. Diese Isolationsschicht hat in erster Linie die Aufgabe der Erhöhung der Durchbruchfestigkeit der Displayzelle.

Besondere Vorteile können dadurch erzielt werden, daß die Orientierungsschicht durch Aufstäuben oder Aufdampfen von organischen Oxiden wie z. B. SiOₓ oder AlₓN_{y} schräg zur Substratoberfläche aufbringbar ist. Hierdurch lassen sich hervorragende Orientierungsergebnisse erzielen. Außerdem kann die Orientierungsschicht im Bedarfsfall nachbehandelt werden, so daß eine hohe Stabilität des Flüssigkristalls gewährleistet werden kann.

Alternativ zu dem zuvor beschriebenen Herstellungsverfahren kann die Black-Matrix anstatt auf die innere Substratoberfläche auch auf die äußere Substratoberfläche aufgebracht werden. Aufgrund der im Vergleich zu Glassubstraten wesentlich dünneren Kunststoff-Folie entsteht dadurch kaum ein Parallaxen-Fehler zwischen Black-Matrix und Elektrodenstruktur. Die Black-Matrix kann auf die äußeren Oberflächen sinnvollerweise durch Druck- oder Spritzlackiertechniken aufgebracht werden oder aber auch durch Auflaminieren einer bedruckten Folie. Bei ferroelektrischen Flüssigkristall-Displays kann die Black-Matrix auch auf die äußere Oberfläche des Grundsubstrates zwischen diesem und einem reflektierenden Polarisator aufgebracht werden. Die erfindungsgemäßen Displays können eine Gesamtdicke von weniger als 0,5 mm aufweisen und eignen sich insbesondere für den Einbau in Plastikkarten, wie Scheckkarten, bei denen ohne eine Batterie Informationen wie Guthaben, verfügbare Telefoneinheiten, etc. angezeigt werden sollen. Bei dieser Anwendung kommen ihre positiven Eigenschaften wie Bistabilität, Biegsamkeit, Unzerbrechlichkeit, geringe Druckempfindlichkeit und Blickwinkelunabhängigkeit neben der dünnen Bauweise besonders zum Tragen.

Die Erfindung umfaßt daher auch eine Anzeige gemäß Anspruch 14 und eine Plastikkarte gemäß Anspruch 15 mit einem erfindungsgemäßen Display, die dadurch gekennzeichnet ist, daß sie Induktionsschleifen aufweist, über die die Schaltspannung und Schaltenergie zum Umschalten der auf dem Display dargestellten Information berührungslos induktiv einkoppelbar sind. Erfindungsgemäß weist die Plastikkarte gemäß Anspruch 16 eine Dünnschichtantenne auf, über die die Schaltspannung und Schaltenergie zum Umschalten der auf dem Display dargestellten Information zum Empfang elektromagnetischer Strahlung berührungslos einkoppelbar ist. Besondere Vorteile ergeben sich hierbei, wenn ferroelektrische Flüssigkristalle für die Displayanzeigen verwendet werden, da sich diese mit sehr geringen Spannungen (≤ 5 Volt) und geringen Schaltenergien umschalten lassen. Die Ausführung der Scheckkarte mit einer Dünnschichtantenne eignet sich auch zu Fernfeldeinkopplungen für das Umschalten der Information des Displays.

Das erfindungsgemäße Verfahren eignet sich auch zur Übertragbarkeit in eine Fertigung mit großen Stückzahlen. Hierbei können die Schichten mit Durchlauf-Aufstäubtechniken aufgebracht werden. Das Aufbringen der leitfähigen strukurierten Schicht kann mit Hilfe von Drucktechniken, z. B. Siebdruck oder Offsetdruck erfolgen. Entsprechend kann auch der Flüssigkristall mittels Drucktechniken aufgebracht werden. Das Decksubstrat kann in einem Rollprozeß auflaminiert werden. Anschließend kann das Decksubstrat mit einem Druckstempel aufgepreßt werden, so daß nach dem Siegelvorgang der Zellinnendruck kleiner als der Atmosphärendruck ist. Weitere Vorteile hinsichtlich einer rationellen Fertigung sind möglich durch Verwendung von Flüssigkristallen, in die bereits Abstandshalter mit ausreichender Dichte eingemischt sind, so daß sich vorzugsweise eine Flächenverteilung von 10⁴ bis 10⁵/mm² ergibt.

Die solchermaßen hergestellten Flüssigkristall-Displays sind unempfindlich gegen Durchbiegung und Druckbelastung und behalten die eingeschriebene Bildinformation ohne Aufwand von Energie. Aufgrund dieser Eigenschaften eignen sie sich insbesondere zur Verwendung als reflektive oder transmissive Anzeigen in mobilen Kleingeräten, bei denen ein kleines Volumen und geringes Gewicht sowie geringer Stromverbrauch und Robustheit erwünscht sind, insbesondere für mobile Einheiten, die variable Informationen ohne Energiequelle dauerhaft anzeigen sollen.

Nachfolgend wird ein bevorzugtes Ausführungsbeispiel eines erfindungsgemäßen Verfahrens sowie eines erfindungsgemäßen Flüssigkristall-Displays anhand der Zeichnung näher erläutert.

Es zeigen:
- Fig. 1: eine schematische Darstellung einer Fertigungsanlage für Flüssigkristall-Displays mit bistabilen Flüssigkristallen;
- Fig. 2: einen Querschnitt durch ein Flüssigkristall-Display mit Foliensubstraten und einem bistabilen Flüssigkristall;
- Fig. 3: eine Draufsicht auf ein Ausführungsbeispiel einer erfindungsgemäßen Plastikkarte.

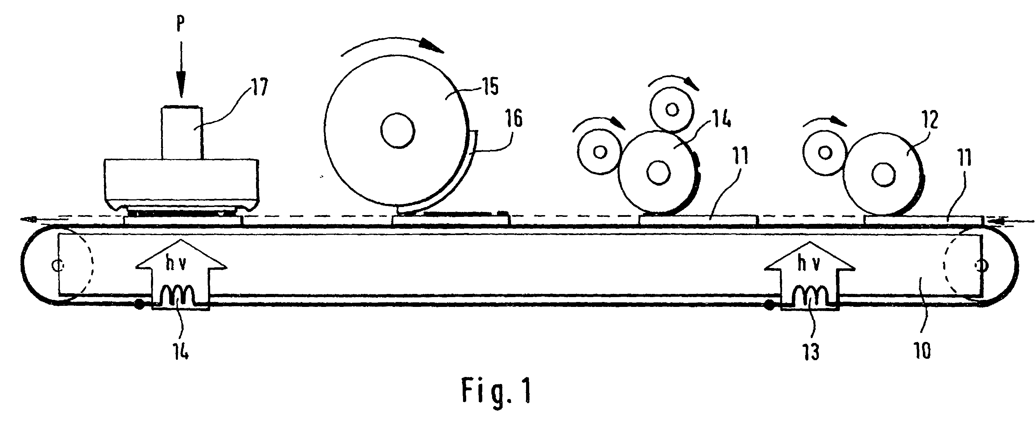

Fig. 1 zeigt eine Transporteinheit 10, auf der ein Flüssigkristall-Display zu verschiedenen Stationen während seines Herstellungsprozesses transportiert wird. Von rechts kommend wird ein Foliensubstrat 11 aus Kunststoff unter einer ersten Druckwalze 12 hindurchtransportiert, die die transparenten leitfähigen Elektroden auf das Substrat 11 aufdruckt. Anschließend wird in Position 13 die Elektrodenstruktur mit UV- oder Infrarotlicht ausgehärtet. Anschließend wird eine Orientierungsschicht für den Flüssigkristall durch schräges Aufstäuben oder Aufdampfen aufgebracht (nicht gezeigt), bevor das Substrat 11 unter einer zweiten Druckwalze 14 hindurchgeführt wird, die zusammen mit einem Kleberahmen einen Flüssigkristall mit eingemischten Abstandshaltern aufdruckt. Anschließend wird durch eine dritte Druckwalze 15 ein Foliendecksubstrat 16 auflaminiert und in einem Arbeitsschritt 14 mit einem Druckstempel 17 mit einem Luftkissen die Displayzelle mit Überdruck verpreßt und anschließend der Kleber zwischen dem Deck- und Grundsubstrat 16, 11 mittels UV- oder Infrarotstrahlung ausgehärtet. Danach kann auf eine der Substratoberflächen noch eine Black-Matrix auflaminiert werden. Eine solche Black-Matrix ist jedoch auch auf der Innenseite der Substrate 11, 16 aufbringbar.

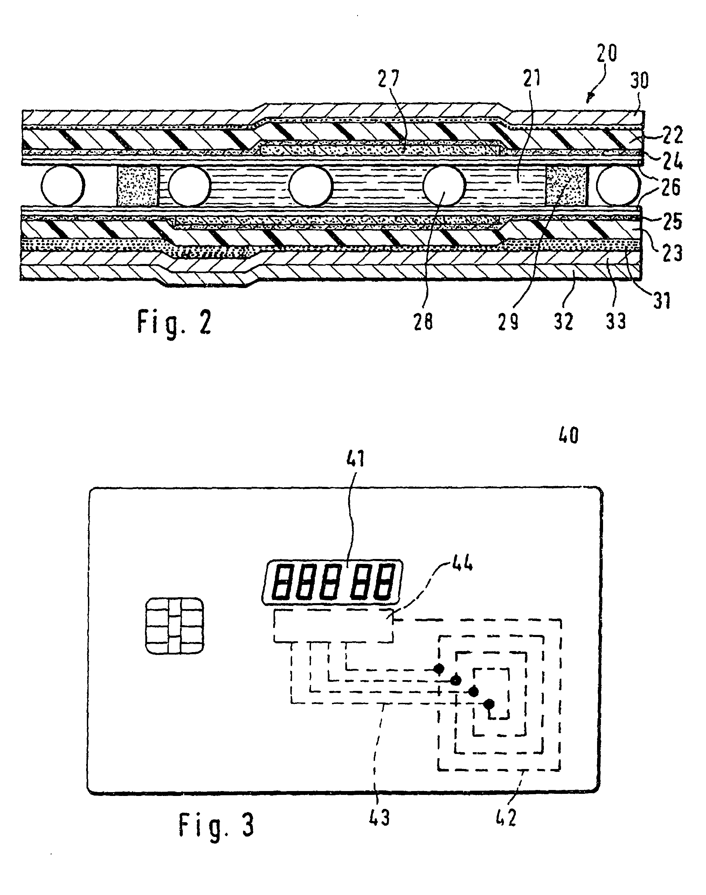

Fig. 2 zeigt einen Querschnitt durch einen Ausschnitt eines Flüssigkristall-Displays 20. Hierbei handelt es sich um ein Display mit einem ferroelektrischen Flüssigkristall 21. Der Flüssigkristall 21 ist zwischen zwei Foliensubstraten 22 und 23 angeordnet. Unmittelbar über den Foliensubstraten sind jeweils Schutzschichten 24, 25 aus Tantalpentoxid und anschließend eine Orientierungsschicht 26 für den Flüssigkristall aufgebracht. Ebenfalls zu erkennen sind die durchsichtigen Elektroden 27 aus Indium-Zinn-Oxid. In den Flüssigkristall 21 sind kugelförmige Abstandshalter 28 mit eingemischt, die einen konstanten Abstand der beiden Substrate 22 und 23 gewährleisten. Jede Zelle des Flüssigkristall-Displays 20 ist mit einem Kleberahmen 29 versehen, der das Zellinnere dicht nach außen abschließt, wobei im Zellinneren ein Unterdruck gegenüber dem Atmosphärendruck herrscht. Das gezeigte Display 20 weist oberhalb der Deckelektrode einen Polarisator 30 und auf der Unterseite des Grundsubtrates 23 eine Black-Matrix 31, einen Polarisator 33 sowie einen Reflektor 32 auf.

Fig. 3 zeigt in der Draufsicht eine Plastikkarte 40 mit einer Flüssigkristallanzeige 41 mit einem bistabilen Flüssigkristall, vorzugsweise einem ferroelektrischen Flüssigkristall. In die Karte 40 integriert ist eine gestrichelt eingezeichnete Flachspule 42, die über Verbindungsleitungen 43 mit einer Ansteuerelektronikeinheit 44 für die Displayanzeige 41 verbunden ist. Die Flachspule 42 dient der berührungslosen induktiven Einkopplung der zum Umschalten der Information der Flüssigkristallanzeige 41 notwendigen Schaltspannungen. Anstelle der Flachspule 42 kann auch eine Dünnschichtantenne eingesetzt werden.

## Patentansprüche

1. Verfahren zur Herstellung von Flüssigkristall-Displays auf Kunststoff-Folien unter Verwendung von bistabilen Flüssigkristallen mit den Schritten:
- Aufbringen einer Schutzschicht (24, 25) aus Tantalpentoxid auf ein transparentes Grundsubstrat (23) und ein Decksubstrat (22), vorzugsweise einer Dicke von 50 bis 150 µm, wobei die Substrate aus Kunststoff-Folie bestehen;
- Aufbringen einer elektrisch leitfähigen organischen oder anorganischen transparenten Schicht (27) auf Grund - und Decksubstrat;
- Strukturierung der leitfähigen Schichten zu Ansteuerelektroden;
- Aufbringen einer Black-Matrix (31) zur Ausblendung von elektrisch nicht angesteuerten Flächen des Displays zur Kontrasterhöhung auf eine der Oberflächen des Grund- oder Decksubstrats;
- Aufbringen einer ganzflächigen Isolationsschicht aus organischem oder anorganischem Material auf Grund - und Decksubstrat;
- Aufbringen einer Orientierungsschicht (26) aus organischem oder anorganischem Material zur Orientierung der Moleküle des Flüssigkristalls auf Grund - und Decksubstrat;
- Aufbringen von Abstandshaltern (28);
- Aufbringen des Foliendecksubstrats (22) und Verkleben mit dem Grundsubstrat (23);
- Einfüllen des Flüssigkristalls (21) der aus SCT-Flüssigkristallmaterial oder aus FLC-Flüssigkristallmaterial besteht;
- Versiegeln der Flüssigkristallzelle unter Druckeinwirkung, sodass der Zelleninnendruck kleiner als der Atmosphärendruck ist.

2. Verfahren nach Anspruch 1, **dadurch gekennzeichnet, dass** die transparente leitfähige Schicht (27) aus Indium-Zinn-Oxid (ITO) gebildet wird .

3. Verfahren nach Anspruch 1 oder 2, **dadurch gekennzeichnet, dass** die Isolationsschicht aus Tantalpentoxid gebildet wird.

4. Verfahren nach einem der Ansprüche 1 bis 3, **dadurch gekennzeichnet, dass** die Orientierungsschicht (26) durch Aufstäuben oder Aufdampfen von vorzugsweise SiOₓ schräg zur Substratoberfläche aufgebracht wird.

5. Verfahren nach einem der Ansprüche 1 bis 4, **dadurch gekennzeichnet, dass** das Aufbringen der leitfähigen strukturierten Schicht (27) mit Hilfe von Drucktechniken wie Siebdruck oder Offsetdruck erfolgt.

6. Verfahren nach einem der Ansprüche 1 bis 5, **dadurch gekennzeichnet, dass** das Aufbringen des Flüssigkristalls (21) mit Hilfe von Drucktechniken wie Siebdruck oder Offsetdruck erfolgt, bevor die Substrate miteinander verklebt werden.

7. Verfahren nach einem der Ansprüche 1 bis 6, **dadurch gekennzeichnet, dass** in den Flüssigkristall (21) Abstandshalter (28) eingemischt sind.

8. Verfahren nach einem der Ansprüche 1 bis 7, **dadurch gekennzeichnet, dass** das Decksubstrat (22) in einem Rollprozess auflaminiert wird.

9. Verfahren nach einem der Ansprüche 1 bis 8, **dadurch gekennzeichnet, dass** das Decksubstrat (22) beim Verkleben und Versiegeln mit einem Druckstempel (17) aufgepresst wird, sodass nach dem Siegelvorgang der Druck innerhalb der Zelle kleiner als der Atmosphärendruck ist.

10. Verfahren nach einem der Ansprüche 1 bis 9, **dadurch gekennzeichnet, dass** die Black-Matrix (31) auf eine der äußeren Substratoberflächen aufgebracht wird.

11. Flüssigkristall-Display (20) mit einem bistabilen SCT oder FLC Flüssigkristall (21), Austeuerelektroden aus einem leitfähigen Material, einer ganzflächigen Isolationsschicht, einer Orientierungsschicht, Abstandshaltern und einem substrat (23) sowie einen Decksubstrat (22), wobei die Substrate (22, 23) aus Kunststoff-Folie bestehen, **dadurch gekennzeichnet, dass** eine Schutzschicht (24, 25) aus Tantalpentoxid auf das Grundsubstrat (23) und das Decksubstrat (2) aufgebracht ist.

12. Flüssigkristall-Display nach Anspruch 11 mit einem bistabilen, ferroelektrischen Flüssigkristall, **dadurch gekennzeichnet, dass** die Textur des Flüssigkristalls durch eine Niederfrequenz-Wechselfeldbehandlung in eine lagenaufgerichtete "Bookshelf"-Textur umgewandelt ist.

13. Flüssigkristall-Display nach Anspruch 11 oder 12, **dadurch gekennzeichnet, dass** das Display (20) eine Gesamtdicke von weniger als 0,5 mm aufweist.

14. Anzeige **dadurch gekennzeichnet, dass** ein Flüssigkristall-Display nach einem der Ansprüche 11 bis 13, als Informationsanzeige in eine Plastikkarte eingebaut ist.

15. Plastikkarte mit einem Flüssigkristall-Display nach einem der Ansprüche 11 bis 13, **dadurch gekennzeichnet, dass** sie Induktionsschleifen aufweist, die der berührungslosen induktiven Einkupplung der für das Umschalten der auf dem Display dargestellten Information notwendigen Schaltspannung und Schaltenergie dienen.

16. Plastikkarte mit einem Flüssigkristall-Display nach einem der Ansprüche 11 bis 13, **dadurch gekennzeichnet, dass** sie eine Dünnschichtantenne aufweist, über die durch Empfang elektromagnetischer Strahlung die notwendige Schaltspannung und Schaltenergie zum Umschalten der auf dem Display dargestellten Information berührungslos einkoppelbar ist.

## Claims

1. A method of producing liquid crystal displays from plastics films using bistable liquid crystals, comprising the following steps:
- applying a protective layer (24, 25) of tantalum pentoxide, preferably with a thickness of 50 to 150 µm, to a transparent base substrate (23) and to a covering substrate (22), wherein the substrates consist of a plastics film;
- applying an electrically conductive organic or inorganic transparent layer (27) to the base and covering substrates;
- structuring the conductive layers to form triggering electrodes;
- applying a black matrix (31) for blanking out areas of the display which are not electrically triggered, in order to increase the contrast on one of the surfaces of the base or covering substrate;
- applying an insulating layer of organic or inorganic material over the whole surface of the base or covering substrate;
- applying an orientation layer (26) of organic or inorganic material to the base and covering substrates in order to orientate the molecules of the liquid crystal;
- applying spacers (28);
- applying the film covering substrate (22) and adhesively bonding it to the base substrate (23);
- introducing the liquid crystal (21), which consists of SCT liquid crystal material or of FLC liquid crystal material;
- sealing the liquid crystal cell under the action of pressure so that the internal cell pressure is less than atmospheric pressure.

2. A method according to claim 1, **characterised in that** the transparent conductive layer (27) is formed from indium-tin oxide (ITO).

3. A method according to claims 1 or 2, **characterised in that** the insulating layer is formed from tantalum pentoxide.

4. A method according to any one of claims 1 to 3, **characterised in that** the orientation layer (26) is applied by powder-coating or evaporation, preferably of SiOx, obliquely to the substrate surface.

5. A method according to any one of claims 1 to 4, **characterised in that** the conductive structured layer (27) is applied with the aid of printing techniques such as screen printing or offset printing.

6. A method according to any one of claims 1 to 5, **characterised in that** the liquid crystal (21) is applied with the aid of printing techniques such as screen printing or offset printing, before the substrates are adhesively bonded to each other.

7. A method according to any one of claims 1 to 6, **characterised in that** spacers (28) are mixed into the liquid crystal (21).

8. A method according to any one of claims 1 to 7, **characterised in that** the covering substrate (22) is applied by lamination in a rolling process.

9. A method according to any one of claims 1 to 8, **characterised in that** during the adhesive bonding and sealing operation the covering substrate (22) is pressed on by a pressure plunger (17) so that after the sealing operation the pressure inside the cell is less than atmospheric pressure.

10. A method according to any one of claims 1 to 9, **characterised in that** the black matrix (31) is applied to one of the outer substrate surfaces.

11. A liquid crystal display (20) comprising a bistable STF or FLC liquid crystal (21), triggering electrodes made of a conductive material, an insulating layer over the whole surface, an orientation layer, spacers and a substrate (23), and comprising a covering substrate (22), wherein the substrates (22, 23) consist of plastics film, **characterised in that** a protective layer (24, 25) of tantalum pentoxide is applied to the base substrate (23) and to the covering substrate (22).

12. A liquid crystal display according to claim 11, comprising a bistable, ferroelectric liquid crystal, **characterised in that** the texture of the liquid crystal is converted by treatment with a low-frequency alternating field into a "bookshelf" texture comprising aligned layers.

13. A liquid crystal display according to claims 11 or 12, **characterised in that** the display (20) has a total thickness of less than 0.5 mm.

14. A display, **characterised in that** a liquid crystal according to any one of claims 11 to 13 is incorporated as an information display in a plastic card.

15. A plastic card comprising a liquid crystal display according to any one of claims 11 to 13, **characterised in that** it comprises induction loops which serve for the contact-less inductive coupling-in of the switching voltage and switching energy which are necessary for changing the information displayed on the display.

16. A plastic card comprising a liquid crystal display according to any one of claims 11 to 13, **characterised in that** it comprises a thin film antenna via which, by the reception of electromagnetic radiation, the necessary switching voltage and switching energy for changing the information displayed on the display can be coupled in in a contact-less manner.

## Revendications

1. Procédé pour la fabrication d'afficheurs à cristal liquide sur des feuilles en matière plastique, utilisant des cristaux liquides bistables, avec les étapes de :
- déposer une couche protectrice (24, 25) en pentoxyde de tantale sur un substrat de base transparent (23) et un substrat de recouvrement (22), de préférence d'une épaisseur de 50 à 150 µm, les substrats étant en feuille en matière plastique ;
- déposer une couche transparente organique ou inorganique conductrice électriquement (27) sur les substrats de base et de recouvrement ;
- structurer les couches conductrices en des électrodes excitatrices;
- déposer une matrice noire (31) sur l'une des faces du substrat de base ou de recouvrement pour occulter des surfaces non excitées électriquement de l'afficheur afin d'augmenter le contraste ;
- déposer une couche isolante entièrement couvrante en matière organique ou inorganique sur les substrats de base et de recouvrement ;
- déposer une couche d'orientation (26) en matériau organique ou inorganique pour l'orientation des molécules du cristal liquide sur les substrats de base et de recouvrement ;
- déposer des espaceurs (28) ;
- appliquer le substrat de recouvrement en feuille (22) et le coller au substrat de base (23) ;
- introduire le cristal liquide (21) qui est constitué de matériau de cristal liquide SCT ou de matériau de cristal liquide FLC ;
- sceller la cellule à cristal liquide en exerçant une pression, de sorte que la pression intérieure de la cellule soit inférieure à la pression atmosphérique.

2. Procédé selon la revendication 1, **caractérisé en ce que** la couche conductrice transparente (27) est formée d'oxyde d'indium-étain (ITO).

3. Procédé selon la revendication 1 ou 2, **caractérisé en ce que** la couche isolante est formée de pentoxyde de tantale.

4. Procédé selon l'une des revendications 1 à 3, **caractérisé en ce que** la couche d'orientation (26) est appliquée par pulvérisation ou vaporisation de préférence de SiOₓ en oblique par rapport à la face du substrat.

5. Procédé selon l'une des revendications 1 à 4, **caractérisé en ce que** l'application de la couche conductrice structurée (27) s'effectue à l'aide de techniques d'impression comme la sérigraphie ou l'impression offset.

6. Procédé selon l'une des revendications 1 à 5, **caractérisé en ce que** l'application du cristal liquide (21) s'effectue à l'aide de techniques d'impression comme la sérigraphie ou l'impression offset avant que les substrats ne soient collés entre eux.

7. Procédé selon l'une des revendications 1 à 6, **caractérisé en ce que** des espaceurs (28) sont mélangés au cristal liquide (21).

8. Procédé selon l'une des revendications 1 à 7, **caractérisé en ce que** le substrat de recouvrement (22) est appliqué par stratification par un processus au rouleau.

9. Procédé selon l'une des revendications 1 à 8, **caractérisé en ce que** le substrat de recouvrement (22) est pressé par un outil de pression (17) lors du collage et du scellement, de sorte qu'après l'opération de scellement la pression à l'intérieur de la cellule soit inférieure à la pression atmosphérique.

10. Procédé selon l'une des revendications 1 à 9, **caractérisé en ce que** la matrice noire (31) est appliquée sur l'une des faces extérieures de substrat.

11. Afficheur à cristal liquide (20) avec un cristal liquide bistable SCT ou FLC (21), des électrodes excitatrices en matériau conducteur, une couche isolante entièrement couvrante, une couche d'orientation, des espaceurs et un substrat de base (23) ainsi qu'un substrat de recouvrement (22), les substrats (22, 23) étant en feuille en matière plastique, **caractérisé en ce qu'**une couche protectrice (24, 25) en pentoxyde de tantale est appliquée sur le substrat de base (23) et le substrat de recouvrement (22).

12. Afficheur à cristal liquide selon la revendication 11 avec un cristal liquide ferroélectrique bistable, **caractérisé en ce que** la texture du cristal liquide est transformée par un traitement par champ alternatif à basse fréquence en une texture "en étagères" disposée en couches.

13. Affichage à cristal liquide selon la revendication 11 ou 12, **caractérisé en ce que** le moyen d'affichage (20) présente une épaisseur totale inférieure à 0,5 mm.

14. Indicateur **caractérisé en ce qu'**un afficheur à cristal liquide selon l'une des revendications 11 à 13 est inséré comme indicateur d'informations dans une carte en matière plastique.

15. Carte en matière plastique avec un afficheur à cristal liquide selon l'une des revendications 11 à 13, **caractérisée en ce qu'**elle comporte des boucles inductives qui servent au couplage inductif sans contact de la tension de commutation et de l'énergie de commutation nécessaires à la commutation des informations représentées sur l'afficheur.

16. Carte en matière plastique avec un afficheur à cristal liquide selon l'une des revendications 11 à 13, **caractérisée en ce qu'**elle comporte une antenne en couche mince, par l'intermédiaire de laquelle la tension de commutation et l'énergie de commutation nécessaires à la commutation de l'information représentée sur l'afficheur sont couplées sans contact par réception de rayonnement électromagnétique.
